# EUROPÄISCHE PATENTSCHRIFT

(11) **EP 2 280 845 B1**
(45) Veröffentlichungstag und Bekanntmachung des Hinweises auf die Patenterteilung: **16.04.2014**
(21) Anmeldenummer: 09753654.4
(22) Anmeldetag: 26.05.2009
(51) Int. Cl.: B60N 2/20, B60N 2/235

(54) **BESCHLAGSYSTEM FÜR EINEN FAHRZEUGSITZ**
FITTING SYSTEM FOR A VEHICLE SEAT
SYSTÈME DE FERRURES POUR UN SIÈGE AUTOMOBILE

(30) Priorität: 28.05.2008 DE 102008026176
(43) Veröffentlichungstag der Anmeldung: 09.02.2011
(73) Patentinhaber: KEIPER GmbH & Co. KG, 67657 Kaiserslautern (DE)
(72) Erfinder: LEHMANN, Ulrich, 53347 Alfter (DE)
(74) Vertreter: Liedtke, Markus
(86) Internationale Anmeldenummer: PCT/EP2009/003701
(87) Internationale Veröffentlichungsnummer: WO 2009/143999

(56) Entgegenhaltungen:
- EP-B- 0 705 727
- DE-A1- 19 831 581
- DE-A1-102006 044 489
- US-A1- 2002 096 924

## Beschreibung

Die Erfindung betrifft ein Beschlagsystem für einen Fahrzeugsitz mit den Merkmalen des Oberbegriffs des Anspruches 1.

Ein Beschlagsystem dieser Art ist, aus der DE 198 31 581 A1 bekannt, wobei der zweite Beschlag zugleich als Freischwenkvorrichtung dient.

Aus der EP 0 705 727 B 1 ist ein Beschlagsystem mit einem ersten Beschlag, einem zweiten Beschlag und einem Übertragungselement zwischen den beiden Beschlägen bekannt. Jeder Beschlag weist ein Wellenstück auf, dessen Drehung den Beschlag entriegelt. Zur Neigungseinstellung einer Lehne wird mittels eines ersten Bedienelements am zweiten Beschlag das Wellenstück gedreht und ein drehfest darauf sitzender erster Hebel geschwenkt. Der erste Hebel nimmt einen zweiten Hebel mit, welcher drehfest mit dem Übertragungselement verbunden ist. Der schwenkende zweite Hebel dreht das Übertragungselement, welcher die Drehbewegung auf das Wellenstück des ersten Beschlags überträgt. Beide Beschläge entriegeln. Zum Freischwenken der Lehne ist dem zweiten Beschlag eine zusätzliche Freischwenkvorrichtung zugeordnet, welche mittels einer schwenkbaren Klinke verriegelt ist. Mittels eines zweiten Bedienelementes wird die Klinke geöffnet, wobei die aufschwenkende Klinke mittels eines Seilzugs den zweiten Hebel schwenkt. Der schwenkende zweite Hebel dreht das Übertragungselement, welcher die Drehbewegung auf das Wellenstück des ersten Beschlags überträgt. Der erste Beschlag entriegelt, während der zweite Beschlag verriegelt bleibt. Mittels des beschriebenen Beschlagsystems wird eine Memorisierung der Lehnenneigung erreicht. Beim Freischwenken der Lehne und anschließendem Zurückschwenken wird die zuvor eingestellte Lehnenneigung wieder eingenommen.

Der Erfindung liegt die Aufgabe zu Grunde, ein Beschlagsystern der eingangs genannten Art zu verbessern, insbesondere einfacher und kostengünstiger zu gestalten. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.

Indem der Mitnehmer des ersten Beschlags das Übertragungselement - auf Mitnahme gekoppelt - aufnimmt, wobei zwischen dem Mitnehmer und dem Übertragungselement in eine Drehrichtung ein Leerweg vorgesehen ist, steht eine einfache Entkopplung zur Verfügung. Es wird insgesamt weniger Bauraum benötigt, und der Aufbau des Beschlagsystems wird vereinfacht. Der Leerweg ist größer als der zum Entriegeln des ersten Beschlags notwendige Entriegelungsweg des Mitnehmers, so dass die Entkopplung vollständig ist. Beim Freischwenken bleibt der zweite Beschlag verriegelt und speichert so die zuvor eingestellte Neigung (Memory-Funktion). Das erfindungsgemäße Beschlagsystem ist für einen Fahrzeugsitz gedacht, dessen Lehne neigungseinstellbar und memorisiert freischwenkbar sein soll, zugleich aber reduzierte Herstellungskosten haben soll, was durch die Verwendung nur einer einzigen Freischwenkvorrichtung im Beschlagsystem erreicht wird.

In bevorzugter Ausführung wird der Leerweg, d.h. die Entkopplung, durch ein Keilwellenprofil zwischen dem Übertragungselement und dem Mitnehmer verwirklicht, wobei in der Ausgangsstellung die Längsrippen des Übertragungselements und die Ränder der Naben-Aufnahme des Mitnehmers in einer Drehrichtung voneinander beabstandet sind. Bevorzugt ist dabei, dass das Übertragungselement und/oder der Mitnehmer ein Profil mit dreizähliger Symmetrie aufweisen. Ein solches Profil ist beispielsweise in der DE 10 2006 041 917 B3 beschrieben. Der erfindungsgemäße Leerweg ist allerdings deutlich größer als ein übliches Spiel, das zum Zwecke des Toleranzausgleichs vorgesehen ist.

Die Betätigung des Mitnehmers bei Entkopplung vom Übertragungselement erfolgt vorzugsweise mittels eines Hebelelements, welches relativ zum Übertragungselement drehbar und mit dem Mitnehmer drehfest verbunden, insbesondere verclipst, ist. Das außerhalb des ersten Beschlags angeordnete Hebelelement weist eine größere radiale Abmessung als das Übertragungselement auf, insbesondere umschließt es das Übertragungselement. Damit wird der radial vorhandene Bauraum außerhalb des ersten Beschlags ausgenutzt. Sofern das Hebelelement keine eigene Befestigungsmöglichkeit für einen Seilzug oder dergleichen bietet, wirkt das zweite Bedienelement vorzugsweise mittels eines Entriegelungshebels auf das Hebelelement ein, insbesondere mittels eines Seilzugs, der einerseits am Entriegelungshebel vorgesehen ist und andererseits mit dem zweiten Bedienelement in Wirkverbindung steht. Vorzugsweise steht das zweite Bedienelement mittels eines weiteren Seilzugs auch in Wirkverbindung mit der Freischwenkvorrichtung, wobei die beiden genannten Seilzüge in Serie oder parallel zueinander liegen können. Für die drehfeste Verbindung des Hebelelements zum Mitnehmer und/oder zum Entriegelungshebel kann ein weiteres Keilwellenprofil vorgesehen sein.

Das erfindungsgemäße Beschlagsystem ist vorzugsweise so ausgebildet, dass bei Betätigung des ersten Bedienelementes das Übertragungselement sich dreht und unmittelbar den Mitnehmer des ersten Beschlags dreht (sowie denjenigen des zweiten Beschlags dreht), wodurch mit den entriegelten Beschlägen eine Neigungseinstellung möglich ist, während bei Betätigung des zweiten Bedienelementes das Übertragungselement ungedreht bleibt und das zweite Bedienelement den Mitnehmer des ersten Beschlags dreht, wodurch mit dem entriegelten ersten Beschlag und der entriegelten Freischwenkvorrichtung ein Freischwenken der Lehne möglich ist.

Im folgenden ist die Erfindung anhand eines in der Zeichnung dargestellten Ausführungsbeispiels näher erläutert. Es zeigen
- Fig. 1: eine perspektivische Ansicht des Ausführungsbeispiels,
- Fig. 2: einen perspektivische Ansicht des Hebelelements und eines Teils des Übertragungselements,
- Fig. 3: eine schematische Darstellung eines Fahrzeugsitzes,

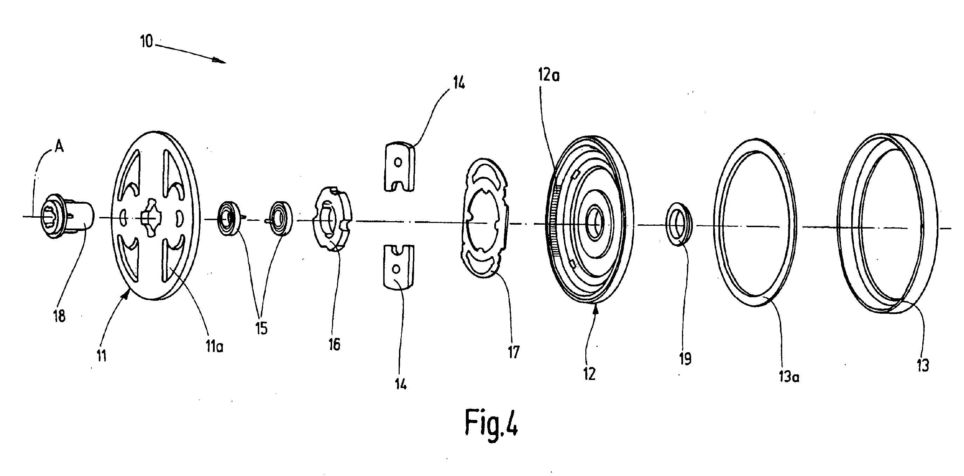

- Fig. 4: eine Explosionsdarstellung des ersten Beschlags,
- Fig. 5: eine Seitenansicht des ersten Beschlags, wobei die über das erste Beschlagteil axial vorstehenden Teile des Mitnehmers schraffiert sind,
- Fig. 6: eine Explosionsdarstellung der Freischwenkvorrichtung, und
- Fig. 7: die mit dem zweiten Bedienelement in Wirkverbindung stehenden Teile.

Ein Fahrzeugsitz 1, welcher vorliegend als Vordersitz eines Kraftfahrzeuges vorgesehen ist, weist ein Sitzteil 3 und eine Lehne 4 auf. Mittels eines Beschlagsystems 5 ist die Lehne 4 einerseits in ihrer Neigung relativ zum Sitzteil 3 einstellbar, wodurch mehrere Gebrauchsstellungen definiert werden, und andererseits freischwenkbar, d.h. nach vorne in eine Nichtgebrauchsstellung schwenkbar, um beispielsweise den Zugang zu einer hinteren Sitzreihe zu erleichtern. Das Beschlagsystem 5 weist auf jeder Fahrzeugsitzseite einen Beschlag auf, welche in der nachfolgend beschriebenen Weise aufgebaut und gekoppelt sind.

Ein erster Beschlag 10, welcher als Rastbeschlag ausgebildet ist, weist ein erstes Beschlagteil 11 und ein zweites Beschlagteil 12 auf, welches relativ zum ersten Beschlagteil 11 um eine Achse A verdrehbar ist. Die Achse A definiert ein nachfolgend verwendetes Zylinderkorrdinatensystem. Die Beschlagteile 11 und 12 sind beide scheibenförmig ausgebildet und werden in axialer Richtung durch einen Umklammerungsring 13 zusammengehalten, welcher fest mit dem ersten Beschlagteil 11 verbunden ist und das zweite Beschlagteil 12 unter Zwischenlage eines Dämpferrings 13a radial übergreift. Der erste Beschlag 10 bildet daher in baulicher Hinsicht eine scheibenförmige Einheit.

Das erste Beschlagteil 11 weist mehrere, vorliegend vier, axial abstehende Führungs- und Lagersegmente 11 a auf, welche einerseits auf ihrer radial nach außen weisenden, zylindrisch gekrümmten Fläche das zweite Beschlagteil 12 lagern und andererseits paarweise zwischen sich wenigstens einen Riegel 14, vorliegend insgesamt zwei Riegel 14, in radialer Richtung beweglich führen. Das zweite Beschlagteil 12 weist - als innenverzahnte Umfangs-Begrenzungsfläche einer napfartigen Vertiefung - einen Zahnkranz 12a auf, mittels welchem das zweite Beschlagteil 12 einerseits auf den Führungs- und Lagersegmenten 11 a gelagert ist und andererseits mit den außenverzahnten Riegeln 14 zusammenwirkt, um den ersten Beschlag 10 zu verriegeln.

Um die Riegel 14 zum Verriegeln radial nach außen in den Zahnkranz 12a zu drücken, ist ein durch Federn 15 vorgespannter Exzenter 16 vorgesehen, welcher um die Achse A drehbar in der Mitte zwischen den Führungs- und Lagersegmenten 11 a angeordnet ist. Um die Riegel 14 zum Entriegeln des ersten Beschlags 10 radial nach innen zu ziehen, so dass sie mit dem Zahnkranz 12a außer Eingriff kommen, ist eine Steuerscheibe 17 vorgesehen, welche axial zwischen den Führungs- und Lagersegmenten 11 a und dem zweiten Beschlagteil 12 angeordnet ist. Die Steuerscheibe 17 wirkt mit den Riegeln 14 zusammen, vorliegend indem axial abstehende Nasen der Riegel 14 in Kulissen der Steuerscheibe 17 greifen. Die Steuerscheibe 17 sitzt vorliegend drehfest auf dem Exzenter 16, welcher mittels eines Mitnehmers 18 - entgegen der Kraft der Federn 15 - drehbar ist, könnte in abgewandelter Form auch direkt auf dem Mitnehmer 18 sitzen.

Der Mitnehmer 18, welcher um die Achse A drehbar gelagert ist, kann die Steuerscheibe 17 um einen der Länge der Kulisse entsprechenden Winkel, vorliegend um etwa 30°, drehen. Der vorzugsweise aus Kunststoff bestehende Mitnehmer 18 ist - vorliegend von der vom zweiten Beschlagteil 12 abgewandten Stirnseite des ersten Beschlagteils 11 her - durch zentrale Öffnungen der beiden Beschlagteile 11 und 12, welche zugleich seiner Lagerung dienen, und - auf Mitnahme gekoppelt - durch den Exzenter 16 gesteckt und wird in axialer Richtung durch einen Sicherungsring 19 gesichert, welcher auf der vom ersten Beschlagteil 11 abgewandten Stirnseite des zweiten Beschlagteils 12 angeordnet ist und welcher - vorzugsweise aus Kunststoff ausgebildet - vorzugsweise auf den Mitnehmer 18 aufgeclipst ist.

Ein am ersten Beschlagteil 11 befestigtes Beschlagunterteil 5a verbindet den ersten Beschlag 10 mit dem Sitzteil, während ein am zweiten Beschlagteil 12 befestigtes Beschlagoberteil 5b den ersten Beschlag 10 mit der Lehne 4 verbindet.

Ein zweiter Beschlag 20 auf der gegenüberliegenden Fahrzeugsitzseite weist auch die oben beschriebenen Bestandteile auf, und dessen erstes Beschlagteil 21 ist am Beschlagunterteil 5a befestigt, jedoch ist das Beschlagoberteil 5b drehbar am zweiten Beschlag 20 gelagert, vorzugsweise an dessen zweitem Beschlagteil 22, und mit dessen zweitem Beschlagteil 22 verriegelbar. Durch die hierfür vorgesehenen Elemente einer Verriegelungsvorrichtung und die Modifikation des Beschlagoberteils 5b und gegebenenfalls des zweiten Beschlagteils 22 wird eine dem zweiten Beschlag 20 zugeordnete Freischwenkvorrichtung 24 definiert. Der grundsätzliche Aufbau einer derartigen Freischwenkvorrichtung 24 ist beispielsweise aus der DE 10 2006 044 490 A 1 für einen Getriebebeschlag bekannt.

Ein ringförmiges Rastelement 24a am zweiten Beschlagteil 22 dient der schwenkbaren Lagerung des Beschlagoberteils 5b. Hierfür weist das Rastelement 24a beispielsweise einen Kragen auf, auf dem das Beschlagoberteil 5b mit einer Lageröffnung, die ebenfalls in der Art eines Kragens ausgebildet sein kann, schwenkbar gelagert ist. Das Rastelement 24a ist direkt oder indirekt mit dem zweiten Beschlagteil 22 fest verbunden, beispielsweise mittels einer Laserschweißnaht (oder auf andere Weise). Eine ringförmige Befestigungscheibe, welche das Beschlagoberteil 5b im Lagerbereich übergreift, kann zur axialen Sicherung des letzteren mit dem Rastelement 24a und optional mit dem zweiten Beschlagteil 22 fest verbunden sein. In radialer Richtung besteht ein gewisses Lagerspiel. Das Beschlagoberteil 5b kann aus zwei aneinander befestigten Teilen bestehen, von denen der eine am Rastelement 24a gelagert und der andere als Adapter mit der Lehne 4 verbunden ist.

Eine Klinke 24b ist mittels eines Lagerbolzens, im folgenden als Klinkenlagerbolzen 24bb bezeichnet, schwenkbar am Beschlagoberteil 5b auf der dem Rastelement 24a zugewandten Seite gelagert. Zum Verriegeln und zur Begrenzung der Schwenkbewegung des Beschlagoberteils 5b nach vorne im (Front-)Crashfall ist in radialer Verlängerung der Klinke 24b am Rastelement 24a ein - vorliegend nasenförmiger - Rastanschlag vorgesehen, vorzugsweise angeformt. Der Klinkenlagerbolzen 24bb ist als Exzenterbolzen ausgebildet, d.h. er ist um eine zur Schwenkachse der Klinke 24b versetzte Achse im Beschlagoberteil 5b relativ zu diesem drehbar gelagert. Zum Ausgleich der Fertigungstoleranzen ist der Klinkenlagerbolzen 24bb so eingestellt und fixiert, dass die Klinke 24b mit einen maximalem Klinkeneingriff spielfrei an dem Rastanschlag des Rastelements 24a anliegt, allerdings außerhalb des Winkelbereichs der Selbsthemmung.

Um die Klinke 24b in Rasteingriff mit dem Rastelement 24a zu halten, sind als Sicherungselemente ein Spannelement 24c und ein Fangelement 24d vorgesehen. Par-allel zum Klinkenlagerbolzen 24bb ist eine eine Entriegelungswelle 24e mittels einer Lagerbuchse 24ee drehbar im Beschlagoberteil 5b gelagert. Auf der Entriegelungswelle 24e sitzt schwenkbar das Spannelement 24c und drehfest das Fangelement 24d. Das Fangelement 24d und das Spannelement 24c sind um die durch die Entriegelungswelle 24e definierte gemeinsame Achse schwenkbar und bei verriegeltem Beschlagoberteil 5b auf die Klinke 24b ausgerichtet. Die Funktionsweise von Fangelement 24d und Spannelement 24c ist in der DE 44 39 644 A1 beschrieben.

Das Spannelement 24c liegt mit einer exzentrisch zur Entriegelungswelle 24e gekrümmten Spannfläche in einem Winkel außerhalb des Selbsthemmungsbereichs an einer Anlagefläche der Klinke 24b an. Das Spannelement 24c wird von einer als Spiralfeder ausgebildeten Spannfeder 24cc vorgespannt, so dass es die Klinke 24b beaufschlagt (und diese gegen den Rastanschlag des Rastelements 25a spannt). Dadurch ist das Beschlagoberteil 5b spielfrei mit dem Rastelement 24a und damit mit dem zweiten Beschlagteil 22 verriegelt. Das Fangelement 24d wird von einer als Schrauben-Zugfeder ausgebildeten Fangfeder 24dd beaufschlagt und liegt an einem Anschlag des Beschlagoberteils 5b an. Im Normalfall, d.h. für den normalen Sitzgebrauch, wird die Klinke 24b durch das Spannelement 24c in ihrer Position gehalten, und das Fangelement 24d ist in geringem Abstand zur Klinke 24b angeordnet. Im Crashfall, wenn Crashkräfte auf die Klinke 24b wirken, kann das Spannelement 24c wegen der fehlenden Selbsthemmung öffnen. Nach einer geringfügigen Schwenkbewegung der Klinke 24b gelangt diese in Anlage an das Fangelement 24d. Das Fangelement 24d stützt dann die Klinke 24b ab, welche innerhalb des Selbsthemmungsbereichs am Fangelement 24d anliegt, vorzugsweise tangential oder konzentrisch und möglichst flächig. Damit wird verhindert, dass die Klinke 24b (weiter) öffnet.

Das Fangelement 24d und das Spannelement 24c sind miteinander mittels einer Schlitz-Zapfen-Führung mit einem Leerweg auf Mitnahme gekoppelt. Hierfür weist das Spannelement 24c einen um die Entriegelungswelle 24e gekrümmten Schlitz auf, in welchen ein Zapfen des Fangelementes 24d greift. Ein am Beschlagoberteil 5b befestigter Deckel 24f deckt die Klinke 24b samt Klinkenlagerbolzen 24bb, das Fangelement 24d, das Spannelement 24c und die Federn 24cc und 24dd ab und schützt diese vor Verschmutzung.

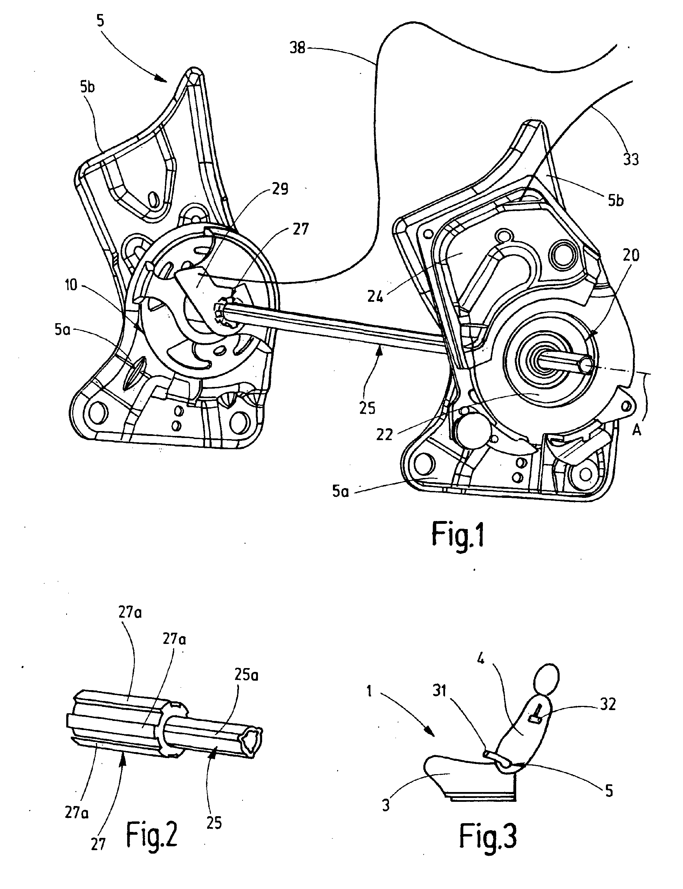

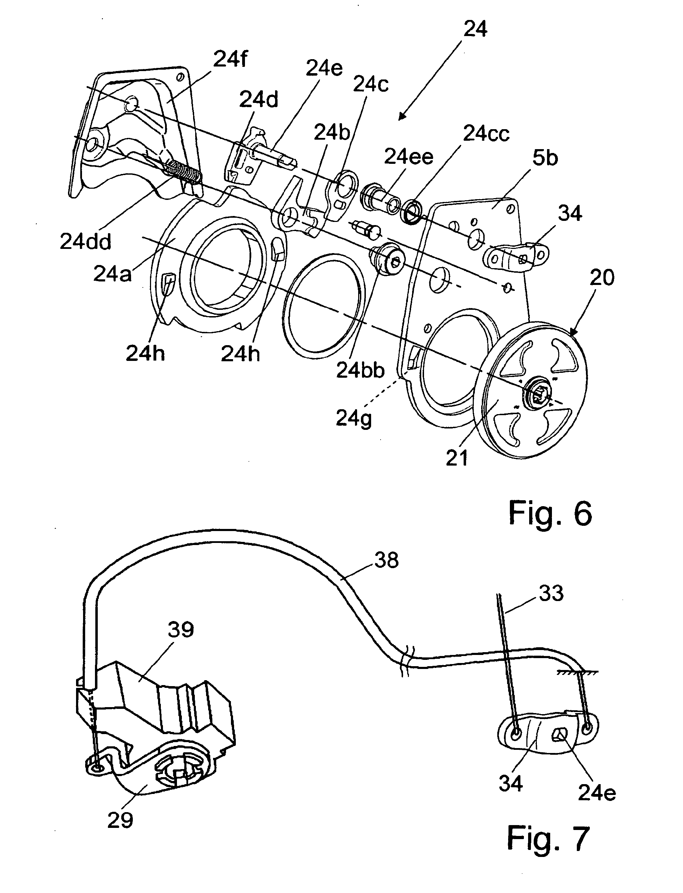

Als Anschlag, der in die Rückwärts-Schwenkrichtung der Lehne 4 (in Fig. 1 und 3 im Uhrzeigersinn, in Fig. 6 gegen den Uhrzeigersinn) wirksam ist, weist das Beschlagoberteil 5b wenigstens einen, vorliegend zwei diagonal bezüglich der Achse A gegenüberliegende erste Anschlagnocken 24g und das Rastelement 24a in gleicher Anzahl und entsprechender Anordnung zweite Anschlagnocken 24h auf. Jeder erste Anschlagnocken 24g, welcher eine in Rückwärts-Schwenkrichtung weisende erste Anschlagfläche aufweist, wirkt mit genau einem zweiten Anschlagnocken 24h zusammen, welcher eine in Vorwärts-Schwenkrichtung weisende zweite Anschlagfläche aufweist. Die paarweise in Umfangsrichtung verteilten Anschlagnocken 24g und 24h sind von der Achse A radial beabstandet angeordnet, durch eine axiale, einander zugewandte Ausstellung im Material in Zungenform ausgebildet und mit ihren am freien Ende der Zungen stirnseitig befindlichen Anschlagflächen in Umfangsrichtung einander zugewandt.

Während bekannte Anschläge radial über den äußeren Rand des zugeordneten Bauteils überstehen, stehen die Anschlagnocken 24g und 24h nur axial vor, d.h. sie sind radial innerhalb des äußeren Randes des zugeordneten Bauteils angeordnet. Die Anschlagnocken 24g und 24h sind so ausgestellt, dass sie mit ihren Anschlagflächen möglichst weit in den vorzugsweise vorhandenen Zwischenraum zwischen Beschlagoberteil 5b und Rastelement 24a ragen. Die Ausstellungen bewirken, dass auf der jeweiligen Rückseite eine Vertiefung im Material entsteht. Die Anschlagflächen verlaufen in axialer und radialer Richtung, d.h. ohne Komponente in Umfangsrichtung, so dass sie im Falle einer Anlage die Kräfte optimal übertragen können. Der durch die Anschlagnocken 24g und 24h gebildete Anschlag begrenzt die Schwenkbewegung des Beschlagoberteils 5b einseitig nach hinten, und zwar sowohl im Normalfall nach dem Freischwenken als auch im (Heck-)Crashfall.

Zum Entriegeln der Freischwenkvorrichtung 24 zu Beginn des Freischwenkens wird die Entriegelungswelle 24e um ihre eigene Achse gedreht. Die Entriegelungswelle 24e nimmt das Fangelement 24d mit, um es zu öffnen, d.h. sie trennt und/oder entfernt es von der Klinke 24b. Dabei nimmt das Fangelement 24d mittels der Schlitz-Zapfen-Führung das Spannelement 24c mit, um die Klinke 24b freizugeben. Das schwenkende Fangelement 24d kommt in Anlage an einen - im wesentlichen radial abstehenden - Entriegelungsfinger der Klinke 24b und zieht diese dadurch auf bzw. unterstützt diese beim Öffnen. Die Klinke 24b ist damit vollständig geöffnet.

Um den Einstellbereich bei der Neigungseinstellung zu begrenzen, d.h. die relative Verdrehung des zweiten Beschlagteils 22 und des Beschlagunterteils 5a zu begrenzen, steht vom Beschlagunterteil 5a parallel zur Achse A ein Sperranschlag ab, den zwei Begrenzungsanschläge des Rastelementes 24a zwischen sich aufnehmen. Durch Zusammenwirken mit einem entsprechenden Begrenzungsanschlag am Beschlagoberteil 5b kann der Sperranschlag auch das Freischwenken der Lehne 4, d.h. die Schwenkbewegung des Beschlagoberteils 5b nach vorne, begrenzen.

Die beiden Beschläge 10 und 20 des Beschlagsystems 5 sind durch ein Übertragungselement 25 gekoppelt, welches vorliegend als eine mit der Achse A fluchtende und um diese drehbare Stange ausgebildet ist. Das Übertragungselement 25 wird vom jeweiligen Mitnehmer 18 aufgenommen, und zwar vorliegend mittels eines Keilwellenprofils auf Mitnahme gekoppelt. Das Übertragungselement 25 weist hierzu ein Profil mit dreizähliger Symmetrie auf mit drei um je 120° in Umfangsrichtung zueinander versetzte Längsrippen 25a, welche in je eine Naben-Aufnahme 18a des diesbezüglich als Nabe ausgebildeten Mitnehmers 18 greift. Wenigstens bei dem ersten Beschlag 10 ist zwischen dem Überträgungselement 25 und dem Mitnehmer 18 in eine Drehrichtung ein Leerweg ("Entkopplungswinkel") vorgesehen, d.h. in der Ausgangsstellung sind die Längsrippe 25a und der Rand der Naben-Aufnahme 18a über einen bestimmten Winkel - von vorliegend etwa 30° - voneinander beabstandet. Der Leerweg ist größer als der zum Entriegeln des ersten Beschlags 10 notwendige Entriegelungsweg des Mitnehmers 18. In die andere Drehrichtung ist in der Ausgangsstellung kein Leerweg vorgesehen. Beim Mitnehmer 18 des zweiten Beschlags 20 ist der Leerweg optional. Dort kann auch eine in beide Drehrichtungen drehfeste Verbindung zwischen Mitnehmer 18 und Übertragungselement 25 vorgesehen sein.

Wenigstens der Mitnehmer 18 des ersten Beschlags 10 ist in seinem an der Stirnseite des ersten Beschlagteils 11 anliegenden Flanschbereich - bei einem gegenüber der Nabe größeren Radius - zur drehfesten Aufnahme eines Hebelelementes 27 ausgebildet. Das Hebelelement 27 weist eine hohlzylindrische Grundform auf, mit einer größeren radialen Abmessung als das Übertragungselement 25, und umschließt das Übertragungselement 25 frei drehbar. Zur Bildung eines weiteren Keilwellenprofils weist das Hebelelement 27 auf seiner Mantelfläche mehrere, vorliegend sechs, radial abstehende Längsrippen 27a auf, während der Mitnehmer 18 in besagtem Flanschbereich entsprechend viele Hebel-Aufnahmen 18b aufweist. Dabei können der Mitnehmer 18 und das vorzugsweise aus Kunststoff ausgebildete Hebelelement 27 so ausgebildet sein, dass beim Einführen der Längsrippen 27a in die Hebel-Aufnahmen 18b eine Clipsverbindung entsteht. Die axiale Abmessung der Hebel-Aufnahmen 18b entspricht dem axialen Überstand des Mitnehmers 18 über die Stirnseite des ersten Beschlagteils 11, während das Hebelelement 27 - und damit auch seine Längsrippen 27a - eine größere axiale Länge aufweisen, also über den Mitnehmer 18 überstehen. In diesem überstehenden Bereich sitzt ein Entriegelungshebel 29 drehfest auf dem Hebelement 27, wofür der Entriegelungshebel 29 ein entsprechendes Keilwellen-Innenprofil aufweist, um die Längsrippen 27a des Hebelelements 27 aufzunehmen. In einer alternativen Ausführung sind der Entriegelungshebel 29 und das Hebelelement 27 einstückig ausgebildet.

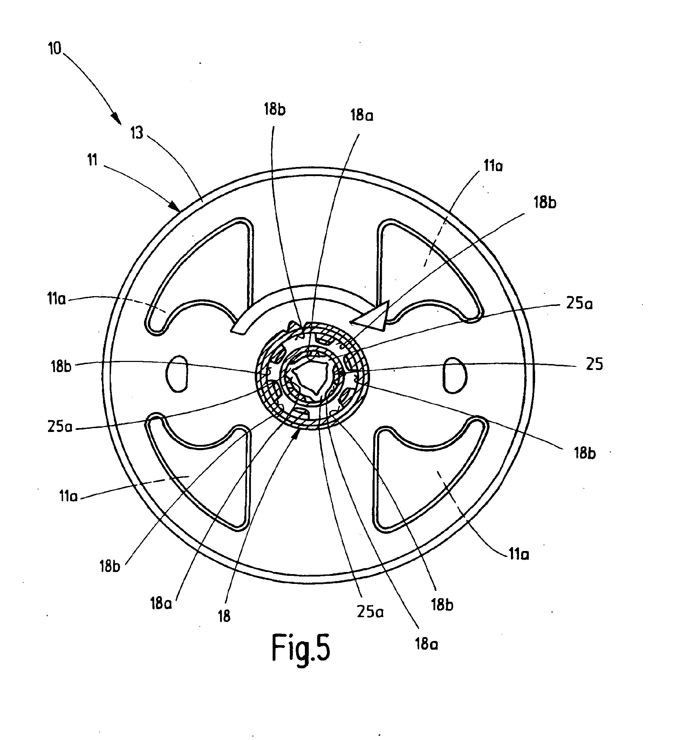

Entsprechend der beiden Funktionen des Beschlagsystems 5 sind zwei Bedienelemente vorgesehen. Ein erstes Bedienelement 31, beispielsweise ein Hebel, ein Handrad oder eine Schlaufe, sitzt - axial außerhalb der beiden Beschläge 10 und 20 - drehfest auf dem Übertragungselement 25 oder beaufschlagt dieses - wenigstens mittelbar - mit einem Drehmoment. Wird das erste Bedienelement 31 bewegt, insbesondere nach oben geschwenkt, so dreht sich das Übertragungselement 25 um die Achse A, in Fig. 5 im Uhrzeigersinn. Bei beiden Beschlägen 10 und 20 wird der Mitnehmer 18 sofort mitgenommen, worauf jeweils der Exzenter 16 und die Steuerscheibe 17 gedreht und die Riegel 14 radial nach innen gezogen werden. Die zweiten Beschlagteile 12 und 22 können nun in eine andere Gebrauchsstellung geschwenkt werden. Wenn die gewünschte neue Neigung der Lehne 4 erreicht ist, wird das erste Bedienelement 31 losgelassen, worauf die Federn 15 den Exzenter 16 zurückdrehen und dabei einerseits die Riegel 14 radial nach außen drücken, damit sie in den Zahnkranz 12a einfallen, und andererseits den Mitnehmer 18 und das Übertragungselement 25 zurückdrehen.

Ein zweites Bedienelement 32, welches vorzugsweise im oberen Bereich der Lehne 4 angeordnet ist, steht mittels eines ersten Seilzuges 33 in Wirkverbindung mit der dem zweiten Beschlag 20 zugeordneten Freischwenkvorrichtung 24, genauer gesagt mit einem Freischwenkhebel 34, welcher drehfest auf der Entriegelungswelle 24e sitzt. Der Freischwenkhebel 34 wiederum steht mittels eines zweiten Seilzuges 38 in Wirkverbindung mit dem Entriegelungshebel 29 des ersten Beschlags 10. Der zweite Seilzug 38 ist beispielsweise ein Bowdenzug, dessen Hülle sich einerseits am zweiten Beschlag 20, beispielsweise an der Freischwenkvorrichtung 24, und andererseits am ersten Beschlag 10, beispielsweise an einem Aufsatz 39 desselben, abstützt, wie in Fig. 7 gezeigt ist. Diesbezüglich zeigt Fig. 1 nur eine schematische Darstellung. Wird das zweite Bedienelement 32 bewegt, insbesondere nach oben gezogen, wird daher einerseits der Freischwenkhebel 34 geschwenkt und dadurch die Freischwenkvorrichtung 24 entriegelt, und andererseits der Entriegelungshebel 29 geschwenkt. Der schwenkende Entriegelungshebel 29 dreht das Hebelelement 27, welches seinerseits den Mitnehmer 18 des ersten Beschlags 10 dreht, in Fig. 5 im Uhrzeigersinn, so dass - wie zuvor beschrieben - der erste Beschlag 10 entriegelt wird. Da nun die Drehung des Mitnehmers 18 relativ zum Übertragungselement 25 andersherum erfolgt (in Fig. 5 im Uhrzeigersinn), wird der Leerweg durchfahren, d.h. das Übertragungselement 25 bleibt ungedreht in seiner Ausgangsstellung. Dadurch bleibt auch der Mitnehmer 18 des zweiten Beschlags 20 ungedreht, so dass der zweite Beschlag 20 verriegelt bleibt. Mit dem entriegelten ersten Beschlag 10 und der entriegelten Freischwenkvorrichtung 24 kann die Lehne 5 nach vorne freigeschwenkt werden. Wenn die Lehne 4 zurückgeschwenkt wird und die zuvor eingenommene Gebrauchsstellung erreicht, verriegelt die Freischwenkvorrichtung 24, wodurch der Freischwenkhebel 34 zurückgeschwenkt wird, so dass der Mitnehmer 18 zurückdrehen kann und damit der erste Beschlag 10 wieder verriegelt.

### Bezugszeichenliste

- 1: Fahrzeugsitz
- 3: Sitzteil
- 4: Lehne
- 5: Beschlagsystem
- 5a: Beschlagunterteil
- 5b: Beschlagoberteil
- 10: erster Beschlag
- 11: erstes Beschlagteil
- 11a: Führungs- und Lagersegment
- 12: zweites Beschlagteil
- 12a: Zahnkranz
- 13: Umklammerungsring
- 13a: Dämpfering
- 14: Riegel
- 15: Feder
- 16: Exzenter
- 17: Steuerscheibe
- 18: Mitnehmer
- 18a: Naben-Aufnahme
- 18b: Hebel-Aufnahme
- 19: Sicherungsring
- 20: zweiter Beschlag
- 21: erstes Beschlagteil des zweiten Beschlags
- 22: zweites Beschlagteil des zweiten Beschlags
- 24: Freischwenkvorrichtung
- 24a: Rastelement
- 24b: Klinke
- 24bb: Klinkenlagerbolzen
- 24c: Spannelement
- 24cc: Spannfeder
- 24d: Fangelement
- 24dd: Fangfeder
- 24e: Entriegelungswelle
- 24ee: Lagerbuchse
- 24f: Deckel
- 24g: erster Anschlagnocken
- 24h: zweiter Anschlagnocken
- 25: Übertragungselement
- 25a: Längsrippe des Übertragungselements
- 27: Hebelelement
- 27a: Längsrippe des Hebelelements
- 29: Entriegelungshebel
- 31: erstes Bedienelement
- 32: zweites Bedienelement
- 33: erster Seilzug
- 34: Freischwenkhebel
- 38: zweiter Seilzug
- 39: Aufsatz
- A: Achse

## Patentansprüche

1. Beschlagsystem für einen Fahrzeugsitz, mit einem ersten Beschlag (10), welcher zum Entriegeln einen um eine Achse (A) drehbaren Mitnehmer (18) aufweist, einem zweiten Beschlag (20), einem Übertragungselement (25) zwischen den beiden Beschlägen (10, 20), einer dem zweiten Beschlag (20) zugeordneten Freischwenkvorrichtung (24), einem ersten Bedienelement (31), bei dessen Betätigung die beiden Beschläge (10, 20) unter Verwendung des Übertragungselementes (25) entriegeln, und mit einem zweiten Bedienelement (32), bei dessen Betätigung der erste Beschlag (10) und die Freischwenkvorrichtung (24) entriegeln, wobei der Mitnehmer (18) des ersten Beschlags (10) das Übertragungselement (25) - auf Mitnahme gekoppelt - aufnimmt, wobei zwischen dem Mitnehmer (18) und dem Übertragungselement (25) in eine Drehrichtung ein Leerweg vorgesehen ist, **dadurch gekennzeichnet, dass** der Leerweg größer ist als der zum Entriegeln des ersten Beschlags (10) notwendige Entriegelungsweg des Mitnehmers (18).

2. Beschlagsystem nach Anspruch 1, **dadurch gekennzeichnet, dass** zwischen dem Übertragungselement (25) und dem Mitnehmer (18) ein Keilwellenprofil vorgesehen ist, wobei in der Ausgangsstellung die Längsrippen (25a) des Übertragungselements (25) und die Ränder der Naben-Aufnahme (18a) des Mitnehmers (18) in einer Drehrichtung voneinander beabstandet sind.

3. Beschlagsystem nach einem der vorhergehenden Ansprüche, **dadurch gekennzeichnet, dass** das Übertragungselement (25) und/oder der Mitnehmer (18) ein Profil mit dreizähliger Symmetrie aufweisen.

4. Beschlagsystem nach einem der vorhergehenden Ansprüche, **dadurch gekennzeichnet, dass** ein Hebelelement (27) vorgesehen ist, welches relativ zum Übertragungselement (25) drehbar und mit dem Mitnehmer (18) drehfest verbunden, insbesondere verclipst, ist.

5. Beschlagsystem nach Anspruch 4, **dadurch gekennzeichnet, dass** das Hebelelement (27) eine größere radiale Abmessung als das Übertragungselement (25) aufweist und insbesondere das Übertragungselement (25) umschließt.

6. Beschlagsystem nach Anspruch 4 oder 5, **dadurch gekennzeichnet, dass** das zweite Bedienelement (32) mittels eines Entriegelungshebels (29) auf das Hebelelement (27) einwirkt.

7. Beschlagsystem nach Anspruch 6, **dadurch gekennzeichnet, dass** der Entriegelungshebel (29) drehfest mit dem Hebelelement (27) verbunden ist, insbesondere einteilig oder mittels eines weiteren Keilwellenprofils.

8. Beschlagsystem nach einem der vorhergehenden Ansprüche, **dadurch gekennzeichnet, dass** das zweite Bedienelement (32) mittels eines Seilzugs (33) in Wirkverbindung mit der Freischwenkvorrichtung (24) steht.

9. Beschlagsystem nach einem der vorhergehenden Ansprüche, **dadurch gekennzeichnet, dass** bei Betätigung des ersten Bedienelementes (31) das Übertragungselement (25) sich dreht und den Mitnehmer (18) des ersten Beschlags (10) dreht, während bei Betätigung des zweiten Bedienelementes (32) das Übertragungselement (25) ungedreht bleibt und der Mitnehmer (18) des ersten Beschlags (10) gedreht wird.

10. Fahrzeugsitz, insbesondere Kraftfahrzeugsitz, mit einem Sitzteil (3) und einer Lehne (4), **dadurch gekennzeichnet, dass** die Lehne (4) mittels eines Beschlagsystems nach einem der vorhergehenden Ansprüche relativ zum Sitzteil (3) in ihrer Neigung einstellbar und freischwenkbar ist.

## Claims

1. Fitting system for a vehicle seat, with a first fitting (10), which has a driver (18) that can be rotated about an axis (A) for the purpose of unlocking, a second fitting (20), a transmission element (25) between the two fittings (10, 20), a free-pivoting device (24) assigned to the second fitting (20), a first operating element (31), upon actuation of which the two fittings (10, 20) unlock, a process involving the use of the transmission element (25), and with a second operating element (32), upon actuation of which the first fitting (10) and the free-pivoting device (24) unlock, the driver (18) of the first fitting (10) accommodating the transmission element (25) in a manner which involves coupling for driving, an idle travel being provided between the driver (18) and the transmission element (25) in one direction of rotation, **characterized in that** the idle travel is greater than the unlocking travel of the driver (18) required to unlock the first fitting (10).

2. Fitting system according to Claim 1, **characterized in that** a splined-shaft profile is provided between the transmission element (25) and the driver (18), the longitudinal ribs (25a) of the transmission element (25) and the edges of the hub receptacle (18a) of the driver (18) being spaced apart in one direction of rotation in the starting position.

3. Fitting system according to one of the preceding claims, **characterized in that** the transmission element (25) and/or the driver (18) have a profile with three-fold symmetry.

4. Fitting system according to one of the preceding claims, **characterized in that** a lever element (27), which can be rotated relative to the transmission element (25) and is connected, in particular clipped, to the driver (18) in a torsionally rigid manner, is provided.

5. Fitting system according to Claim 4, **characterized in that** the lever element (27) has a larger radial dimension than the transmission element (25) and, in particular, surrounds the transmission element (25).

6. Fitting system according to Claim 4 or 5, **characterized in that** the second operating element (32) acts on the lever element (27) by means of an unlocking lever (29).

7. Fitting system according to Claim 6, **characterized in that** the unlocking lever (29) is connected in a torsionally rigid manner to the lever element (27), in particular integrally or by means of a further splined-shaft profile.

8. Fitting system according to one of the preceding claims, **characterized in that** the second operating element (32) is in operative connection with the free-pivoting device (24) by means of a cable pull (33).

9. Fitting system according to one of the preceding claims, **characterized in that**, when the first operating element (31) is actuated, the transmission element (25) rotates and rotates the driver (18) of the first fitting (10) while, when the second operating element (32) is actuated, the transmission element (25) remains unrotated and the driver (18) of the first fitting (10) is rotated.

10. Vehicle seat, in particular motor-vehicle seat, with a seat part (3) and a backrest (4), **characterized in that** the backrest (4) is adjustable in terms of its inclination relative to the seat part (3) and can be pivoted freely by means of a fitting system according to one of the preceding claims.

## Revendications

1. Système de ferrures pour un siège de véhicule comprenant une première ferrure (10), laquelle comprend, pour le déverrouillage, un élément d'entraînement (18) pouvant tourner autour d'un axe (A), une deuxième ferrure (20), un élément de transmission (25) entre les deux ferrures (10, 20), un dispositif de pivotement libre (24) associé à la deuxième ferrure (20), un premier élément de commande (31) lors de l'actionnement duquel les deux ferrures (10, 20) se déverrouillent en ayant recours à l'élément de transmission (25) et un deuxième élément de commande (32) lors de l'actionnement duquel la première ferrure (10) et le dispositif de pivotement libre (24) se déverrouillent, l'élément d'entraînement (18) de la première ferrure (10) recevant - de manière accouplée par entraînement - l'élément de transmission (25), une course à vide étant prévue dans un sens de rotation entre l'élément d'entraînement (18) et l'élément de transmission (25), **caractérisé en ce que** la course à vide est plus grande que la course de déverrouillage de l'élément d'entraînement (18) nécessaire pour le déverrouillage de la première ferrure (10).

2. Système de ferrures selon la revendication 1, **caractérisé en ce qu'**un profil cannelé est prévu entre l'élément de transmission (25) et l'élément d'entraînement (18), les nervures longitudinales (25a) de l'élément de transmission (25) et les bords du logement de moyeu (18a) de l'élément d'entraînement (18) étant espacés les uns des autres dans un sens de rotation dans la position de départ.

3. Système de ferrures selon l'une quelconque des revendications précédentes, **caractérisé en ce que** l'élément de transmission (25) et/ou l'élément d'entraînement (18) présente(nt) un profil à symétrie ternaire.

4. Système de ferrures selon l'une quelconque des revendications précédentes, **caractérisé en ce qu'**il est prévu un élément de levier (27), lequel peut tourner par rapport à l'élément de transmission (25) et est relié de manière solidaire en rotation à l'élément d'entraînement (18), en particulier enclipsé sur celui-ci.

5. Système de ferrures selon la revendication 4, **caractérisé en ce que** l'élément de levier (27) présente une dimension radiale plus grande que l'élément de transmission (25) et entoure en particulier l'élément de transmission (25).

6. Système de ferrures selon la revendication 4 ou 5, **caractérisé en ce que** le deuxième élément de commande (32) agit sur l'élément de levier (27) au moyen d'un levier de déverrouillage (29).

7. Système de ferrures selon la revendication 6, **caractérisé en ce que** le levier de déverrouillage (29) est relié de manière solidaire en rotation à l'élément de levier (27), en particulier d'un seul tenant ou au moyen d'un profil cannelé supplémentaire.

8. Système de ferrures selon l'une quelconque des revendications précédentes, **caractérisé en ce que** le deuxième élément de commande (32) est en liaison fonctionnelle avec le dispositif de pivotement libre (24) au moyen d'un câble de commande (33).

9. Système de ferrures selon l'une quelconque des revendications précédentes, **caractérisé en ce que**, lors de l'actionnement du premier élément de commande (31), l'élément de transmission (25) tourne et entraîne en rotation l'élément d'entraînement (18) de la première ferrure (10) tandis que, lors de l'actionnement du deuxième élément de commande (32), l'élément de transmission (25) ne tourne pas et l'élément d'entraînement (18) de la première ferrure (10) est entraîné en rotation.

10. Siège de véhicule, en particulier siège de véhicule automobile, comprenant une partie d'assise (3) et un dossier (4), **caractérisé en ce qu'**au moyen d'un système de ferrures selon l'une quelconque des revendications précédentes, l'inclinaison du dossier (4) par rapport à la partie d'assise (3) peut être ajustée et le dossier peut être pivoté librement.
